(19) Europäisches Patentamt
European Patent Office
Office européen des brevets

(11) **EP 3 413 523 B1**

(12) **EUROPEAN PATENT SPECIFICATION**

(45) Date of publication and mention
of the grant of the patent:
**24.11.2021 Bulletin 2021/47**

(51) Int Cl.:
***H04L 25/03*** *(2006.01)*     ***H04L 1/00*** *(2006.01)*
***H04L 27/34*** *(2006.01)*

(21) Application number: **17175318.9**

(22) Date of filing: **09.06.2017**

(54) **DISTRIBUTION MATCHER AND METHOD OF OPERATING A DISTRIBUTION MATCHER**

VERTEILUNGSANPASSER UND VERFAHREN ZUM BETRIEB EINES VERTEILUNGSANPASSERS

ADAPTATEUR DE DISTRIBUTION ET PROCÉDÉ D'EXPLOITATION D'UN ADAPTATEUR DE DISTRIBUTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.12.2018 Bulletin 2018/50**

(73) Proprietor: **Nokia Solutions and Networks Oy
02610 Espoo (FI)**

(72) Inventor: **SCHMALEN, Laurent
70435 Stuttgart (DE)**

(74) Representative: **DREISS Patentanwälte PartG
mbB
Friedrichstraße 6
70174 Stuttgart (DE)**

(56) References cited:
- **FORNEY JR G D: "TRELLIS SHAPING", IEEE
  TRANSACTIONS ON INFORMATION THEORY,
  IEEE PRESS, USA, vol. 38, no. 2 PT.01, 1 March
  1992 (1992-03-01), pages 281-300, XP000257683,
  ISSN: 0018-9448, DOI: 10.1109/18.119687**
- **TANAHASHI M ET AL: "Trellis Shaping for
  Controlling Envelope of Single-Carrier
  High-Order QAM Signals", IEEE JOURNAL OF
  SELECTED TOPICS IN SIGNAL PROCESSING,
  IEEE, US, vol. 3, no. 3, 1 June 2009 (2009-06-01),
  pages 430-437, XP011257789, ISSN: 1932-4553**
- **MATTHEW C VALENTI ET AL: "Constellation
  Shaping for Bit-Interleaved LDPC Coded APSK",
  IEEE TRANSACTIONS ON COMMUNICATIONS,
  IEEE SERVICE CENTER, PISCATAWAY, NJ. USA,
  vol. 60, no. 10, 1 October 2012 (2012-10-01), pages
  2960-2970, XP011469144, ISSN: 0090-6778, DOI:
  10.1109/TCOMM.2012.070912.110533**

## Description

**Field of the invention**

The disclosure relates to a distribution matcher which is configured for receiving a digital input signal and for transforming said digital input signal into an output signal.
The disclosure further relates to a method of operating such distribution matcher.

**Background**

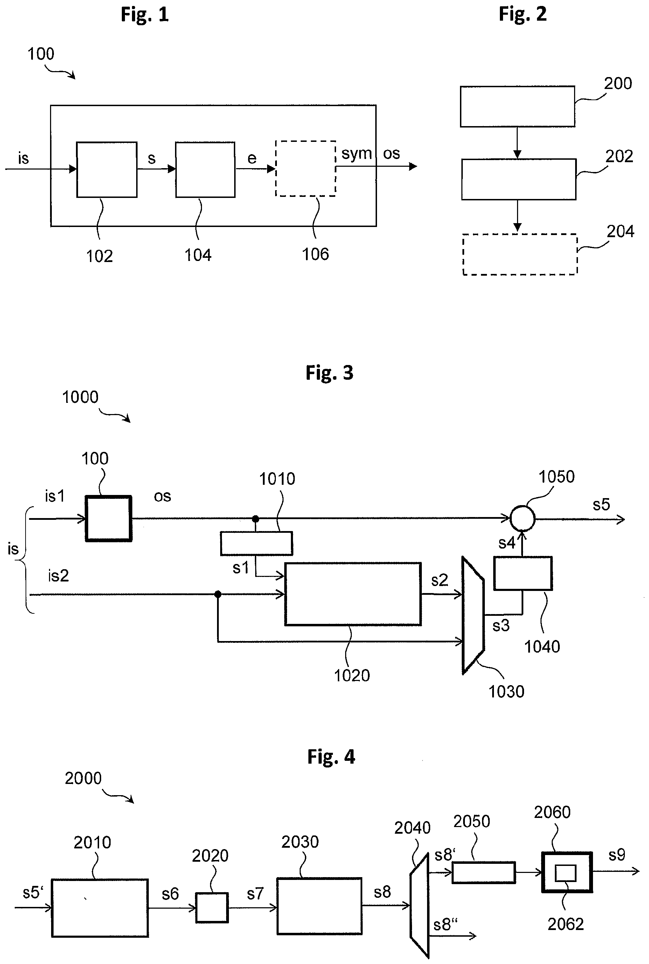

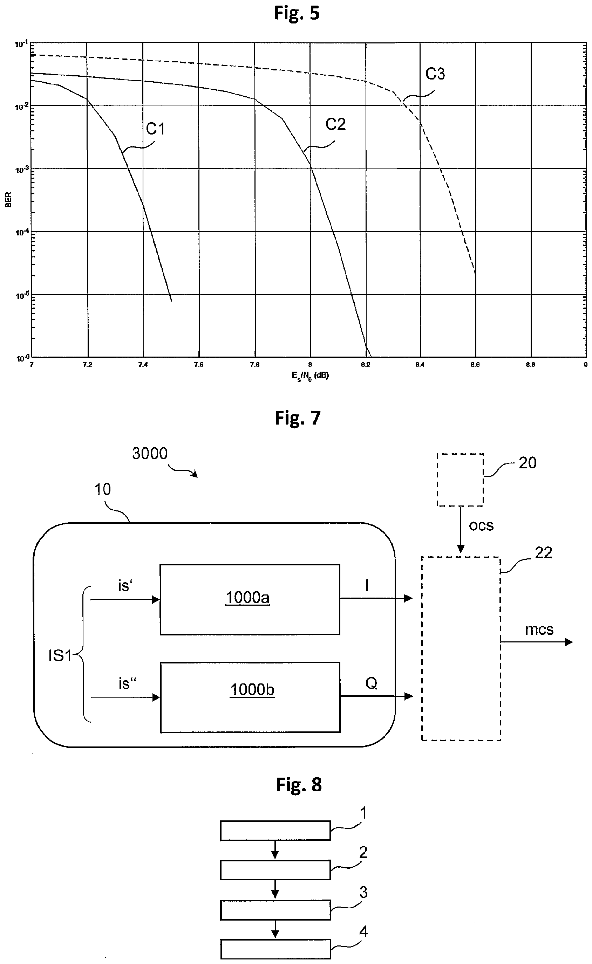

Distribution matchers may e.g. be used within optical transmission systems, wherein data is transmitted over optical transmission links which e.g. comprise one or more fiber spans. In order to reach the theoretical limits for said transmissions, it is recognized that constellation shaping may be used to approach the Shannon limit. Recently, a Probabilistic Amplitude Shaping (PAS) scheme has been proposed by Böcherer, G.; Steiner, F.; Schulte, P.: "Bandwidth Efficient and Rate-Matched Low-Density Parity-Check Coded Modulation". IEEE Trans. Commun., Oct 2015, [reference 1].
Reference 1 is also available on the Internet at http://ieeexplore.ieee.org/document/7307154/. The scheme of reference 1 employs inter alia a distribution matcher. As an example, the distribution matcher is explained in section V. on page 4656 in combination with Fig. 7 of reference 1. The scheme as proposed by reference 1 enables to optimize, i.e., increase, net information rates. Details of the conventional PAS scheme are disclosed by Fig. 3 of reference 1.
Further details related to a distribution matcher that may be used with the system of reference 1 are also provided by Schulte, P.; Böcherer, G.: Constant Composition Distribution Matching. IEEE Trans. Inf. Theory, Dec 2015, [reference 2].
Reference 2 is also available on the Internet at http://ieeexplore.ieee.org/document/7322261/. A conventional distribution matcher (DM) may e.g. take $U_1$ uniformly distributed input bits and may generate $V_1$ symbols belonging to a set $A := \{A_1, A_2, ..., A_M\}$, where for example $M := 2^{m-1}$, and where $m$ denotes the number of bits mapped to a final (real-valued) constellation used for modulation of an optical carrier signal for the optical signal transmission. The conventional DM imposes a probability distribution $P_A(A_i)$ on the symbols, which can be selected such that the information-theoretic capacity is maximized. The rate of the DM is defined as

$$R_{DM} := \frac{U_1}{V_1} \le H(A) = -\sum_{i=1}^{M} P_A(A_i) \log_2 P_A(A_i),$$

wherein H (A) is the entropy of the set A. Ideally, the distribution matcher yields $R_{DM} \approx H(A)$.
The proposed conventional probabilistic amplitude shaping (PAS) scheme may be used to approach the Shannon limit for close-to-capacity transmission of data over optical transmission links.
The conventional distribution matcher can be implemented and good performance can be achieved for instance if very long sequences of bits are treated. One method that has been proposed in reference 2 is to use a variant of arithmetic coding to generate constant composition (CC) codes that closely approach *H(A)*. This approach has however the drawback that it is not easily implementable in highspeed optical communication systems as it is an inherently serial process and optical receivers running at throughputs of multiple 100Gbit/s require a massive amount of parallelization. This will e.g. severely impact the latency and the number of transistors required to implement the conventional DM to accommodate the parallel instances of the inherently serial DMs.
FORNEY JR G D, "TRELLIS SHAPING", IEEE TRANSACTIONS ON INFORMATION THEORY, IEEE PRESS, USA, (19920301), vol. 38, no. 2 PT.01, doi:10.1109/18.119687, ISSN 0018-9448, pages 281 - 300, http://dx.doi.org/10.1109/TCOMM.2012.070912.110533, discloses Trellis shaping.

**Summary**

Thus, a solution is required that enables to build and operate a distribution matcher with reduced complexity and which offers the possibility to efficiently attain a high degree of parallelization. This object is achieved by a method for operating a distribution matcher according to claim 1, a distribution matcher according to claim 3, a method of operating a distribution dematcher according to claim 5, and a distribution dematcher according to claim 6.
Advantageously, the embodiments are based upon channel codes and in particular Golay codes in some preferred embodiments. The embodiments advantageously employ the fact that error patterns of channel codes are sparse and that the related error syndromes contain a compressed representation of this sparse error pattern. According to an aspect, it is thus proposed to interpret the input to the DM according to the embodiments (or the selected sequence of bits, respectively) as such syndrome and to use a syndrome decoder to convert the syndrome into said output vector, e.g., bit pattern, which is usually a longer, sparse pattern (as compared to the selected sequence) with unequal distribution of bits or symbols, which may advantageously be used to map the modulation symbols for the modulation of an optical carrier signal. Depending on the used channel code, according to some embodiments, the output vector may comprise binary elements (binary digits, "bits", thus forming a bit pattern) or n-nary elements (n>2). As an example, when using ternary Golay codes as channel code according to some embodiments, the output vector may comprise vector elements that have three different values.

According to some embodiments, at a receiver, after error correction and binary-to-symbol mapping of those bits associated with amplitudes, the syndrome may be computed, e.g., by multiplication with a parity-check matrix of the channel code, which may then be treated as distribution dematcher (inverse distribution matcher) output. The advantage of this solution is that the complexity both on transmitter side and receiver side is extremely low as compared to the abovementioned conventional systems of references 1, 2.

Advantageously, said method further comprises generating a sequence of output symbols depending on said output vector or bit pattern, respectively. As mentioned above, these symbols may e.g. be used for modulation.

Advantageously, said channel code is one of the following:

a) binary Golay code, e.g. $G_{23}$, also denoted as $G_{23}(23,12,7)$, b) ternary Golay code, e.g. $G_{11}$, also denoted as $G_{11}$ $(11, 6, 5)$ .

According to further embodiments, Hamming codes - or associated syndrome decoder(s), respectively - may also be used to convert said syndrome to said bit pattern in order to attain a desired probability distribution.

According to a further embodiment, the step of converting is performed such that said output vector or bit pattern (or the elements thereof, respectively) comprises a predetermined probability distribution, wherein particularly said predetermined probability distribution is different from a probability distribution of said bits of said input signal. As an example, the probability distribution of said bits of said input signal may be a uniform distribution or at least roughly a uniform distribution, wherein the predetermined probability distribution is substantially non-uniform. According to particularly preferred embodiments, the predetermined probability distribution is as unequal as possible (i.e., $P(X=0) \gg P(X=1)$), wherein $P(X=0)$ denotes the probability that an element "X" takes on the value "0").

Further embodiments feature an apparatus for processing a digital input signal according to claim 7.

Further embodiments feature an optical transmitter according to claim 8.

Further advantageous embodiments are provided by the dependent claims.

## Brief description of the figures

Further features, aspects and advantages of the illustrative embodiments are given in the following detailed description with reference to the drawings in which:

Figure 1      schematically depicts a simplified block diagram of a distribution matcher according to an embodiment,

Figure 2      schematically depicts a simplified flow-chart of a method of operating a distribution matcher according to an embodiment,

Figure 3      schematically depicts a simplified block diagram of an apparatus comprising a distribution matcher according to an embodiment,

Figure 4      schematically depicts a simplified block diagram of an apparatus comprising a distribution dematcher according to an embodiment,

Figure 5      schematically depicts a bit error rate over a signal to noise ratio for several modulation techniques,

Figure 6      schematically depicts a simplified block diagram of components of a distribution matcher according to an embodiment,

Figure 7      schematically depicts a simplified block diagram of an optical transmitter according to an embodiment, and

Figure 8      schematically depicts a simplified flow-chart according to a further embodiment.

## Description of the embodiments

Figure 1 schematically depicts a simplified block diagram of a distribution matcher 100 according to an embodiment. The distribution matcher 100 is configured for receiving a digital input signal is and for transforming said digital input signal is into an output signal os. More specifically, the distribution matcher 100 is configured to select a sequence s of bits of said input signal is and to convert said selected sequence s of bits to an output vector, e.g. to a bit pattern e.

According to preferred embodiments, at least portions of the input signal is may comprise a roughly uniform probability distribution. By converting said selected sequence s of bits to said bit pattern e, it is possible to influence the probability distribution of bits of said bit pattern e. Particularly, according to some embodiments, the input signal is may comprise basically uniformly distributed bits, and these uniformly distributed bits of the input signal is or the selected sequence s of said input signal is may be transformed into basically non-uniformly distributed bits represented by said bit pattern e. In other words, the bit pattern e obtained according to the embodiments may comprise a second probability distribution, which is different from a first probability distribution of the input signal is or the selected sequence as of said input signal is, respectively. This also applies to embodiments, where the produced output vector comprises non-binary elements (e.g., ternary elements or the like).

According to an embodiment, the distribution matcher 100 comprises a selector 102 which is configured to select said sequence s of bits, e.g. a predetermined number of bits, from said input signal is. According to some embodiments, this selected sequence s of bits is in the further process interpreted in the sense of an error syndrome of a channel code. In other words, the selected sequence s of bits from the input signal is represents a portion of digital data which is considered to represent the above-mentioned error syndrome of the channel code.

In view of this, the selector 102 may also be considered as being configured to select said sequence s of bits from said input signal is as a syndrome s of a channel code.

The distribution matcher 100 comprises a further block 104 which is configured to convert said selected sequence s (being interpreted in the sense of said error syndrome of the channel code) to the bit pattern e. According to an example, the above-mentioned transformation from the first probability distribution of the bits of the signal is to a second probability distribution (which is preferably different on said first probability distribution) of the bits of the bit pattern e may substantially be accomplished by means of the converter block 104.

According to a further embodiment, the distribution matcher 100 may comprise an optional block 106 which is configured to receive said bit pattern e and to generate a sequence of output symbols sym depending on said bit pattern e. I.e., if the optional block 106 is present, the output signal os of the distribution matcher 100 comprises said output symbols sym. Otherwise, if the optional block 106 is not present, the output signal os of the distribution matcher 100 comprises the bit pattern e or generally the output vector.

As already mentioned above, according to some embodiments, the step of converting performed by converter 104 may be performed such that said bit pattern e comprises a predetermined second probability distribution, which is different from a first probability distribution of said bits of said input signal is or selected sequence s, respectively.

As already mentioned above, the selected sequence s may be interpreted as an error syndrome of a channel code. In view of this, according to some embodiments, converter 104 may comprise a functionality of a syndrome decoder for the respective channel code, wherein said syndrome decoder generates a bit pattern ("output vector") e depending on said selected sequence s.

According to the claimed invention, said channel code is one of the following: a) binary Golay code, e.g. $G_{23}$, also denoted as $G_{23}(23,12,7)$, b) ternary Golay code, e.g. $G_{11}$, also denoted as $G_{11}(11,6,5)$, Hamming code. As can be seen, a selection of the channel code has an effect particularly on the converter 104, namely in that its functionality implementing the syndrome decoder should be chosen depending on the selected channel code. As an example, if Golay code $G_{23}$ is selected as a channel code for interpreting said selected sequence s in the sense of an error syndrome of said channel code $G_{23}$, the converter 104 should comprise a compatible syndrome decoder for the error syndromes of Golay code $G_{23}$. As a further example, if Golay code $G_{11}$ is selected as a channel code for interpreting said selected sequence s in the sense of an error syndrome of said channel code $G_{11}$, the converter 104 should comprise a compatible syndrome decoder for the error syndromes of Golay code $G_{11}$. According to further embodiments, if another type of channel code is used, e.g. a Hamming code, similarly, a respective syndrome decoder for error syndromes of the Hamming codes should be selected to provide the output vector depending on the selected sequence s of the input signal is.

Figure 2 schematically depicts a simplified flow-chart of a method of operating a distribution matcher 100 (Fig. 1) according to an embodiment. A first step 200 (Fig. 2) comprises selecting a sequence s (Fig. 1) of bits of said input signal is, particularly as a syndrome of a channel code. A further step 202 (Fig. 2) comprises converting said syndrome s to a bit pattern e by using a syndrome decoder of said channel code. A further, optional, step 204 comprises generating a sequence of output symbols sym (Fig. 1) depending on said bit pattern e. As an example, step 200 of figure 2 may be performed by the selector 102 of the distribution matcher 100 (Fig. 1), step 202 of figure 2 may be performed by the converter 104, and the optional step 204 may optionally be performed by the optional block 106 of the distribution matcher 100.

Figure 3 schematically depicts a simplified block diagram of an apparatus 1000 inter alia comprising a distribution matcher 100 according to an embodiment. The apparatus 1000 may form part of a transmitter, particularly an optical transmitter, and is configured to receive an input signal is, which may represent a digital data sequence, and to determine output symbols s5 depending on said input signal is.

As can be seen from figure 3, the apparatus 1000 provides a first portion is1 of said input signal is to a distribution matcher 100, which may e.g. comprise a structure and functionality of the distribution matcher 100 as explained above with reference to figures 1, 2. At its output, the distribution matcher 100 provides the output signal os which may comprise a sequence of symbols sym as explained above. As an example, for a first number of U1 many bits of said first portion is1 of said input signal is, the distribution matcher 100 provides V1 many output symbols in form of the output signal os. A rate $R_{DM}$ of the distribution matcher 100 is defined as $R_{DM}$ = U1/V1, said rate characterising how many input bits of said first portion is1 are used for generating one of said V1 many output symbols.

According to an embodiment, said V1 many symbols os are mapped to a digital data sequence (i.e., a bit sequence) again, which is performed by block 1010. According to an embodiment, block 1010 may be configured to perform a Gray mapping applying a per se known Gray coding. The Gray coded digital data sequence provided at an output of block 1010 is denoted with reference sign s1. These bits s1 are provided to an input of a forward error correction (FEC) encoder 1020, together with a second portion is2 of said input signal is. According to an embodiment, the FEC encoder 1020 is configured to apply a systematic FEC code (for example, an "LDPC (low-density parity-check)" code) and to take at its input K = U2 + V1·(m-1) many bits and to generate N-K many parity bits s2, wherein said parity bits s2, together with the second portion is2, cf. the multiplexer 1030 and its output signal s3, are mapped from binary to bipolar values s4 (e.g., by setting 0 → +1 and 1 → -1) by bipolar mapper 1040, said bipolar values s4 being used to multiply the V1 many symbols os by means of multiplier 1050, wherein bipolar symbols are obtained as the output signal s5. The FEC encoder 1020 may also be denoted as "Parity Generator". Note that $N = K/R_C$ where $R_C$ is the rate of the FEC encoder 1020. The afore-explained configuration advantageously enables one to generate a symmetric PAM (pulse amplitude modulation) constellation $\{\pm A_1, \pm A_2, ..., \pm A_M\}$, wherein $A_1, .., A_M$ represent values of the symbols sym of the output signal.

According to an embodiment, a complex QAM (quadrature amplitude modulation) constellation with $2^{2m}$ many symbols may be generated by employing two such schemes 1000 as depicted by Fig. 3, using the output of one scheme for the real ("I-")axis and the output of the other scheme for the imaginary ("Q-")axis.

As an example, figure 7 exemplarily depicts an apparatus 10 comprising a first block 1000a and a second block 1000b, wherein each of said blocks 1000a, 1000b comprises a configuration as depicted for apparatus 1000 of figure 3. A first input signal IS1, which comprises a digital data sequence, is split into a primary portion is' and a secondary portion is", wherein these portions are fed to the respective blocks 1000a, 1000b as digital input signals. The first block 1000a provides output symbols similar to signal s5 according to figure 3, which represent an in-phase ("I") component, and a second block 1000b provides output symbols similar to signal s5 according to figure 3, which represent a quadrature-phase ("Q") component.

According to an embodiment, the so obtained I/Q components I, Q may be provided to an optical modulator 22 which receives an optical carrier signal ocs from a laser source 20, said optical modulator 22 being configured to modulate said optical carrier signal ocs depending on said I/Q components, to provide a modulated carrier signal mcs.

The configuration 3000 of Fig. 7 may hence form part of or represent an optical transmitter, which provides a modulated optical carrier signal mcs, that has been modulated depending on said input signal IS1, wherein PAS is enabled for both I, Q components by means of the distribution matcher 100 according to the embodiments, which is comprised in both blocks 1000a, 1000b.

Advantageously, as explained further above, the provisioning of the distribution matcher 100 according to the embodiments within the apparatus 1000 of figure 3 enables to control a probability distribution of the bits of the bit pattern e (Fig. 1) and thus enables to apply probabilistic amplitude shaping within the apparatus 1000 which contributes to approaching the Shannon limit.

Figure 4 schematically depicts a simplified block diagram of an apparatus 2000 comprising a distribution dematcher 2060, which performs an operation inverse to the operation of the distribution matcher 100, and which is thus also denoted as distribution dematcher, according to an embodiment. In other words, the distribution dematcher 2060 is configured to transform an output vector or a bit pattern e as obtained at an output of the converter 104 according to figure 1 into a selected bit sequence s corresponding to an error syndrome as explained above. In principle, the apparatus 2000 performs an operation basically inverse to that of apparatus 1000 according to figure 3.

At its input, apparatus 2000 receives a sequence of symbols s5', which may e.g. correspond to the sequence of symbols s5 as provided at an output of the apparatus 1000 according to figure 3. Block 2010 of apparatus 2000 represents a demapper which is configured to perform an inverse mapping that transforms the received symbols s5' into signal s6. The block 2010 is configured to carry out bit-wise demapping of the equivalent PAM constellation by using standard bit-wise demodulation. The function generates in a preferred embodiment log-likelihood ratios for every bit of the codeword by using, e.g., the technique described in Section II.C of Buchali, F.; Steiner, F.; Böcherer, G.; Schmalen, L.; Schulte, P.; Idler, W.: "Rate Adaptation and Reach Increase by Probabilistically Shaped 64-QAM: An Experimental Demonstration". IEEE Journal Lightwave Technology, Apr 2016, [reference 5].

Reference 5 is also available on the Internet at http:// ieeexplore.ieee.org/iel7/50/4357488/. The block 2020 is configured to provide an interleaving function that rearranges the bits to extract the sign bits of the constellation and put them to the parity positions of the code such that they correspond to portions s2 and is2 of the signal.

The equivalent bit stream s7 as obtained at an output of block 2020 is recovered by the LDPC decoder 2030 and potential transmission errors are corrected. The demultiplexer 2040 receives an error corrected output signal s8 from the LDPC decoder 2030 and separates the corrected output signal s8 into a first portion s8' and a second portion s8". Block 2050 performs a binary-to-symbol mapping, e.g. the inverse operation as performed by block 1010 according to figure 3. Finally, the distribution dematcher 2060 performs an inverse distribution matching of those bits that belong to amplitudes (after binary to symbol mapping by block 2050). The inverse distribution matcher ("DM$^{-1}$", also denoted as distribution dematcher) 2060 reverts the distribution matching operation as performed by the distribution matcher 100 according to the embodiments. According to an embodiment, the distribution dematcher 2060 may comprise a calculating unit 2062 configured to revert the distribution matching operation. Hence, at an output of apparatus 2000 of figure 4, a signal s9 is obtained which represents a received and demodulated version of the input signal is1 as provided to an input of the distribution matcher 100 of apparatus 1000 according to figure 3.

In the following, some embodiments to realize probabilistic shaping systems based on the principle according to the embodiments are explained, which are based on Golay codes.

According to some embodiments, and as already mentioned above, shaping based on binary Golay codes is proposed.

Consider the Golay (23,12) Golay code with generator matrix

$$
\boldsymbol{G} =
\begin{pmatrix}
1 & & & & & & & & & & & & 1 & 1 & & 1 & 1 & 1 & & & & 1 & \\
& 1 & & & & & & & & & & & 1 & 1 & & 1 & 1 & 1 & & & & & 1 \\
& & 1 & & & & & & & & & & 1 & & 1 & 1 & & 1 & 1 & 1 & & & \\
& & & 1 & & & & & & & & & & 1 & & 1 & 1 & & 1 & 1 & 1 & & \\
& & & & 1 & & & & & & & & & & 1 & 1 & & 1 & 1 & & 1 & 1 & 1 \\
& & & & & 1 & & & & & & & & & 1 & & 1 & 1 & & 1 & 1 & 1 & \\
& & & & & & 1 & & & & & & 1 & & & 1 & & 1 & 1 & & 1 & 1 & \\
& & & & & & & 1 & & & & & 1 & 1 & & & 1 & & 1 & 1 & & 1 & \\
& & & & & & & & 1 & & & & 1 & 1 & 1 & & & 1 & & 1 & 1 & & \\
& & & & & & & & & 1 & & & & 1 & 1 & 1 & & & 1 & & 1 & 1 & \\
& & & & & & & & & & 1 & & 1 & & 1 & 1 & 1 & & & 1 & & & 1 \\
& & & & & & & & & & & 1 & 1 & 1 & 1 & 1 & 1 & 1 & 1 & 1 & 1 & 1 & 1
\end{pmatrix}
$$

Note that matrix elements that are not depicted have zero value and that this is only an exemplary generator matrix of size 12×23, which is not unique and there exist many other representations of the generator matrix of a Golay code. In this representation, the systematic generator matrix can be written as $\boldsymbol{G} = (\boldsymbol{I_{12}} \ \boldsymbol{P})$, where $\boldsymbol{I_{12}}$ is the 12x12 identity matrix. The parity-check matrix of the Golay code is then given by $\boldsymbol{H} = (\boldsymbol{P}^T \ \boldsymbol{I_{11}})^T$ where $\boldsymbol{I_{11}}$ denotes the 11×11 identity matrix. Every codeword of the Golay code is obtained as $\boldsymbol{x} = \boldsymbol{uG}$, where $\boldsymbol{u}$ is a length $k$ = 12 information row vector and $\boldsymbol{x}$ the length $n$ = 23 codeword. The codewords have the property that $\boldsymbol{Hx}^T = \boldsymbol{0}$. The Golay codes are very special codes as they belong to the class of perfect codes. Besides trivial codes, the only codes that belong to the class of perfect codes are Hamming codes and Golay codes. Binary Golay codes, which can correct 3 errors, have hence the property that $\sum_{i=0}^{3} \binom{23}{i} = 2^{11}$. This property is important for the current embodiment. The current embodiment is based on the fact that the error patterns correctable by the Golay code are sparse. In fact, the Golay code can correct three errors and there are error patterns $\mathbf{e}$ that contain either 0, 1, 2, or 3 errors (in a total of 23 bits). The number of such patterns $\mathbf{e}$ equals $\sum_{i=0}^{3} \binom{23}{i}$.

According to some embodiments, at the receiver, which may e.g. comprise the apparatus 2000 of Fig. 4 or at least a similar configuration, syndrome decoding may be employed. This means that the receiver first computes the syndrome of a (hypothetical) received codeword $\boldsymbol{y}$ as $\boldsymbol{s} = \boldsymbol{Hy}^T$. As $\boldsymbol{y} = \boldsymbol{x} + \mathbf{e}$, we have $\boldsymbol{s} = \boldsymbol{H}(\boldsymbol{x} + \mathbf{e})^T = \boldsymbol{He}^T$. As there are exactly $2^{11}$ possible error patterns and also $2^{11}$ possible syndromes, there is a one-to-one relationship between all possible syndromes and error patterns. This advantageously enables the principle according to the embodiments, according to which an incoming signal (cf. e.g. the input signal is or a selected sequence s thereof, Fig. 1), which may e.g. be distributed with uniform probability, may be interpreted as a syndrome. Thus, a syndrome decoder (cf. e.g. block 104 of Fig. 1) may be used to generate a (longer) bit sequence e or output vector **e** that preferably has an unequal distribution of 0s and 1s (or other (further) elements, in case of non-binary digits/vector elements). In fact, according to the present embodiment, wherein the Golay (23,12) Golay code is used as a channel code, it is obtained

$$R_{DM} = \frac{11}{23} \text{ and } P(E = 1) = 2^{-11} \sum_{i=0}^{3} \binom{23}{i} \frac{i}{23} = \frac{127}{1024} \approx 0.124$$

As an example, the Golay code Golay (23,12) as explained above may be employed for the distribution matcher 100 (Fig. 1, 3, 7) according to some embodiments.

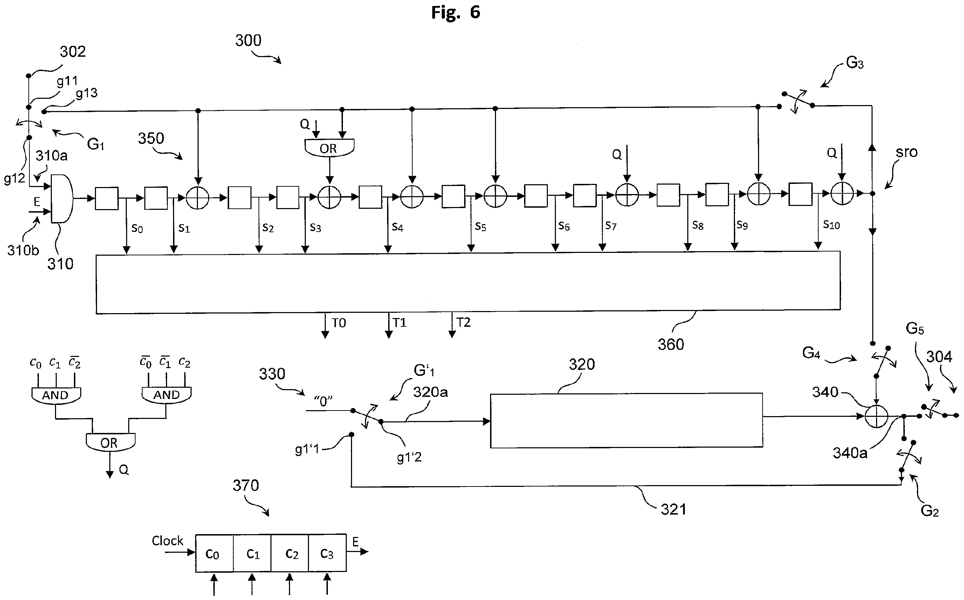

Figure 6 schematically depicts a simplified block diagram of components of a distribution matcher according to an embodiment. As an example, the distribution matcher 100 of Fig. 1, or, more precisely, its block 104, may comprise the functionality of the configuration as depicted by Figure 6.

There exist multiple decoders for the Golay code, and one example could be to use the so-called "modified Kasami decoder", described for instance in S. Lin, D. J. Costello, Jr., "Error Control Coding", second edition, Prentice Hall, [reference 3], Sec. 5.9.1, and T. Kasami, "A Decoding procedure for multiple-error-correction cyclic codes," IEEE Trans. Inform. Theory, Apr. 1964, [reference 4].

Fig. 6 depicts an embodiment for a syndrome decoder 300 (cf. block 104 of Fig. 1) according to an embodiment, which is based on a modified Kasami decoder as explained in detail in references 3, 4.

The following operations are performed in a first step, "step 1", also cf. Fig. 8: Initially, a first gate $G_1$, which is associated with an input 302, is in the left-most position, connecting the input 302 with a first input 310a of a first OR gate 310 (by connecting its terminals g11, g12 with each other). A further gate $G_1'$ is in the top position, connecting an input 320a of a buffer 320 (which has a length of 23 bit) with a zero terminal 330, that provides a value of "0" (zero). A second gate $G_2$, and a third gate $G_3$, and a fourth gate $G_4$ are open. A fifth Gate $G_5$ is closed to shift out to an output 304 an output of the previous computation, which is obtained at an output 340a of a first adder 340. The input value E, which is provided to a second input 310b of the first OR gate 310, is set to zero. In the first 11 clock cycles, the input vector **s** (which e.g. corresponds with said selected sequence s of Fig. 1) is shifted into the shift register 350, and then the first gate $G_1$ is put into the right position, connecting its terminals g12, g13 with each other. In the remaining 12 clock cycles, the buffer 320 is filled with "0"s before the further gate $G_1'$ is put into the lower position in Fig. 6.

After step 1, in step 2, also cf. Fig. 8, the following operations are performed: The first gate $G_1$ remains in its right position, connecting its terminals g12, g13 as already mentioned above and step 1. The further gate $G_1'$ is put into its "bottom position", connecting its terminals g1'1, g1'2 with each other. Both gates $G_1$, $G_1'$ stay in this position for the remainder of the operation.

The gates $G_4$ and $G_5$ are open (as depicted by Fig. 6) and gates $G_2$ and $G_3$ are closed (different than depicted by Fig. 6). The shift register 350 comprises in total 11 1-bit-memories, e.g. flip-flops, which are not provided with individual reference signs in Fig. 6 for clarity. However, their respective outputs are indicated by reference signs $s_0$, $s_1$, ..., $s_{10}$ in Fig. 6. An evaluation block 360 receives the outputs or taps $s_0$, $s_1$, ..., $s_{10}$, respectively, as input signals and provides three output signals $T_0$, $T_1$, $T_2$ depending on said input signals.

The first output signal $T_0$ of block 360 is set to "1" if the weight w(**s**) of the syndrome $\sum_{i=0}^{10} s_i$ is less than or equal to 3. Otherwise, it is set to "0".

According to some embodiments, testing for error patterns is done as follows:
If the first output signal $T_0$ of block 360 equals "1", $T_0 = 1$, (i.e., the Hamming weight of the syndrome is less than or equal to 3), errors are confined to the 11 high-order positions of vector **e** and hence the threshold $T_0 = 1$ closes the fourth gate $G_4$ and opens the third gate $G_3$. Digits are read out of the buffer register 320 and the syndrome register output sro is added (e.g., XORed) by adder 340 to the digit of the buffer 320, which is then fed back via the closed second gate $G_2$ to the buffer 320 over the line 321.

If **w(s) > 3**, i.e. the Hamming weight of the syndrome $\sum_{i=0}^{10} s_i$ is greater than 3, the Hamming weight **w(s')** of **s'** = ($s_0$ $\overline{s}_1$ $\overline{s}_2$ $s_3$ $s_4$ $\overline{s}_5$ $\overline{s}_6$ $s_7$ $\overline{s}_8$ $\overline{s}_9$ $s_{10}$) is tested, where $\overline{s}$ means logical negation of s. If w(**s'**) ≤ 2, where **w()** denotes the Hamming weight, i.e., the number of non-zero entries, the output $T_1$ of block 360 is set to "1" and the fourth gate $G_4$ is closed again and the third gate $G_3$ is opened. Otherwise, the output $T_1$ is set to "0". The counter 370 is initialized and starts counting from the decimal value 2. At the same time, the syndrome currently stored within the shift register 350 is shifted without feedback (as the third gate $G_3$ is opened) and the output Q is "1" when counter 370 counts to "3", and "4" is fed into the syndrome register (i.e., the shift register 350) to form the test error pattern. When the counter 370 counts "8", the output E is set to "1", and the leftmost stage of the syndrome register 350 (i.e., input to flip-flop storing $s_0$) is set to "1" hence. The digits coming out of the buffer 320 are then added with the syndrome register output sro by adder 340.

If the Hamming weight **w(s) > 3** and **w(s') > 2** the test vector **s'' =** $(s_0\ s_1\ \bar{s}_2\ \bar{s}_3\ s_4\ s_5\ \bar{s}_6\ \bar{s}_7\ s_8\ s_9\ \bar{s}_{10})$ is formed. If the Hamming weight w(**s''**) ≤ 2, the output $T_2$ of block 360 is set to "1" and the fourth gate $G_4$ is closed again and the third gate $G_3$ is opened. Otherwise, the output $T_2$ is set to "0". The counter 370 is initialized and starts counting from the decimal value "3". At the same time, the syndrome s (comprising the digits $s_0$ to $s_{10}$) is shifted without feedback and the output Q is "1" when the counter 370 counts to 3, and 4 is fed into the syndrome register 350 to form the test error pattern. When the counter 370 counts 8, the output E is set to 1, and the leftmost stage of the syndrome register is set to 1 hence. The digits coming out of the buffer 320 are then added with the syndrome register output sro by means of adder 340.

If *w*(**s**) **> 3** and *w*(**s'**) **> 2** and *w*(**s''**) **> 2,** the syndrome decoder 300 of the distribution matcher moves to step 3 of the algorithm, which is explained in the following.

In step 3, also cf. Fig. 8, both syndrome **s** and buffer 320 are cyclically shifted once with gates $G_3$, $G_2$ closed and gates $G_4$, $G_5$ open. After this, step 2 is repeated.

After step 3, step 4, also cf. Fig. 8, is performed as follows: The distribution matching operation (i.e., transformation of the selected sequence s, cf. Fig. 1, into bit pattern e) is completed as soon as the buffer 320 has been cyclically shifted exactly 46 times. The fifth gate $G_5$ is then turned on, i.e. closed, and in a next operating cycle (e.g., comprising the steps 1 to 4) the content of the buffer 320, which corresponds to the bit pattern e (or vector **e,** respectively), is shifted via the output 304 towards the sink (e.g., block 106 of Fig.1).

According to a further embodiment, at a receiver side, a compression may be performed by multiplying the received vector **e** by the parity-check matrix **H** to recover **s = He**$^T$. As an example, for the apparatus 2000 of Fig. 4, this recovery of the selected sequence s (or vector **s,** respectively), may be performed by the distribution dematcher block 2060, or its calculating unit 2062, respectively. The functionality of the block 2060, 2062 can advantageously be accomplished with a comparatively simple circuit requiring only a few XOR and AND gates.

According to some embodiments, the functionality of the converter 104 or syndrome decoder, respectively, e.g. the structure of Fig. 6, may be implemented in form of a hardware circuit and/or software and/or firmware or any combination thereof. A complete hardware-based implementation may be particularly preferred for high data rates of the digital signals is, os (Fig. 1) to be processed.

According to further embodiments, the fact may be used that the Golay code can be represented as a cyclic code with generator polynomial either

$$G_1(Z) = 1 + Z^2 + Z^4 + Z^5 + Z^6 + Z^{10} + Z^{11}$$

or

$$G_2(Z) = 1 + Z + Z^5 + Z^6 + Z^7 + Z^9 + Z^{11}$$

In the approach explained above with reference to Fig. 6, e.g. related to the modified Kasami decoder, it is assumed that $G_1(Z)$ is used as generator polynomial, so it may be assumed in the following that this generator polynomial is used as well in the receiver according to some embodiments. As an example, in this case, distribution dematching (inverse process for distribution matching) may be carried out by first interpreting the received **e** (e.g., input signal to block 2060 of Fig.4) as polynomial **e(Z)** and then computing **s(Z)** as remainder of the polynomial division of **e(Z)** by $G_1(Z)$. This can be accomplished using a shift register, as shown for instance in reference 3, Fig. 5.7, where the taps correspond to the coefficients of the polynomial $G_1(Z)$. According to some embodiments, some minor modifications may be made, like the addition of a switch (similar to the fifth gate $G_5$ of Fig. 6) to tap out the syndrome to a data sink, once computed.

Figure 5 shows a comparison of the "Golay coded distribution matcher", e.g. the distribution matcher 100 according to the embodiments based on Golay codes, cf. curve C2, with a system based on 8-QAM together with a rate 0.8 LDPC code, cf. curve C3, in view of an ideal DM, cf. curve C1. Depicted is a bit error rate over a signal-to-noise ratio. The rate of the LDPC code is adapted such that both systems have the same spectral efficiency. As mentioned, Fig. 5 also compares the system according to the embodiments, cf. curve C2, with a system employing ideal distribution matching based on CCDM (cf. reference 2), cf. curve C1. With the extremely efficient and low-complexity Golay-based scheme as proposed according to the principle of the embodiments, a gain of around 0.4-0.5 dB can be obtained with respect to the reference 8-QAM scheme of curve C3.

In the following, a further embodiment is disclosed, which relates to shaping based on ternary Golay codes.

The ternary Golay (11,6) code is defined over the Galois field GF(3), which are the integers modulo 3. Its generator matrix is given by

$$G = \begin{pmatrix} 1 & & & & & 2 & 2 & 2 & 2 & 2 \\ & 1 & & & & 2 & 2 & 1 & 1 & \\ & & 1 & & & 2 & 1 & 2 & & 1 \\ & & & 1 & & 1 & 2 & & 2 & 1 \\ & & & & 1 & 1 & & 2 & 1 & 2 \\ & & & & & 1 & & 1 & 1 & 2 & 2 \end{pmatrix}$$

and it has the according parity-check matrix

$$H = \begin{pmatrix} 1 & 1 & 1 & 2 & 2 & & 1 & & & & \\ 1 & 1 & 2 & 1 & & 2 & & 1 & & & \\ 1 & 2 & 1 & & 1 & 2 & & & 1 & & \\ 1 & 2 & & 1 & 2 & 1 & & & & 1 & \\ 1 & & 2 & 2 & 1 & 1 & & & & & 1 \end{pmatrix}$$

The ternary Golay code, which has first been proposed by the Finnish football pool enthusiast Juhani Virtakallio, who published it in 1947 in issues 27, 28 and 33 of the football magazine Veikkaaja, can be used as well to generate a shaped constellation according to the principle of the embodiments. The ternary Golay code is a double-error correcting code. Ternary Golay codes, which can correct 2 errors, have hence the property that

$$\sum_{i=0}^{2} \binom{11}{i} 2^i = 3^5$$

This property is important for the present embodiment. The embodiment is based on the fact that the error patterns correctable by the considered Golay code are sparse. In fact, the Golay code can correct three errors and there are error patterns **e** that contain either 0, 1, 2 errors (in a total of 11 ternary digits). The number of such patterns **e** equals $\sum_{i=0}^{2} \binom{23}{i} 2^i$ . According to some embodiments, at the receiver, syndrome decoding is employed, cf. e.g. block 2062 of Fig. 4. This means that the receiver first computes the syndrome of a (hypothetical) received codeword **y** as $s = Hy^T$. As $y = x + e$, we have $s = H(x + e)^T = He^T$. As there are exactly $3^5$ possible error patterns and also $3^5$ possible syndromes, there is a one-to-one relationship between all possible syndromes and error patterns.

This advantageously enables the principle according to the embodiments, according to which an incoming signal (cf. e.g. the input signal is (Fig. 1) or a selected sequence s thereof), which may e.g. be distributed with uniform probability, may be interpreted as a syndrome. Thus, a syndrome decoder (cf. e.g. block 104 of Fig. 1) may be used to generate a (longer) sequence e or vector **e** that preferably has an unequal distribution of 0s, 1s, and 2s (three different values for elements of output vector **e** due to ternary Golay code).

For the present example, we have $R_{DM}$ = 5/11 and

$$P(E = 1) = P(E = 2) = 3^{-5} \sum_{i=0}^{2} \binom{11}{i} 2^i \frac{i}{22} = \frac{7}{81} \approx 0.0864$$

The ternary Golay code will hence give a distribution that consists of 3 levels. According to a further embodiment, a virtual 4th level E=3 with P(E=3)=0 may be introduced and this scheme may be used as a "shaped version" of 64-QAM.

The unique benefit of the principle according to the embodiments is that probabilistic shaping, especially PAS, can be easily and efficiently implemented without requiring major receiver modifications (utilization of BICM (bit interleaved coded modulation)) and with simple, easily parallelizable ultra-low-complexity distribution matching at the transmitter side.

Compared to existing solutions based on arithmetic distribution matching, which is an inherently serial algorithm, the proposed solution is easily parallelizable and can be implemented in VLSI (very large scale integration) with high data rate throughputs.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. Method of operating a distribution matcher (100) at a transmitter, wherein the distribution matcher (100) is configured for receiving a digital input signal (is) and for transforming said digital input signal (is) into an output signal (os), said method comprising the following steps:

   - selecting (200) a sequence (s) of bits of said input signal (is) as a syndrome (s) of a channel code, and
   - converting (202) said syndrome (s) to an output vector (e) by using a syndrome decoder (102) for said channel code,
   - wherein said method further comprises generating (204) a sequence of output symbols (sym) of the output signal (os) depending on said output vector (e),
   - wherein said channel code is one of the following: binary Golay code, ternary Golay code, Hamming code.

**2.** Method according to claim 1, wherein said step of converting (202) is performed such that said output vector (e) comprises a predetermined probability distribution, wherein particularly said predetermined probability distribution is different from a probability distribution of said bits of said input signal (is).

**3.** Distribution matcher (100) for a transmitter, wherein the distribution matcher (100) is configured for receiving a digital input signal (is) and for transforming said digital input signal (is) into an output signal (os), said distribution matcher (100) comprising a selector (102) and a converter (104), said distribution matcher (100) being configured to perform the following steps:

- selecting (200), by means of the selector (102), a sequence (s) of bits of said input signal (is) as a syndrome (s) of a channel code, and
- converting (202), by means of the converter (104), said syndrome (s) to an output vector (e) by using a syndrome decoder (102) of said channel code,
- generating (204) a sequence of output symbols (sym) of the output signal (os) depending on said output vector (e),
- wherein said channel code is one of the following: binary Golay code, ternary Golay code, Hamming code.

**4.** Distribution matcher (100) according to claim 3, wherein said distribution matcher (100) is configured to perform the method according to claim 2.

**5.** Method of operating a distribution dematcher (2060) at a receiver, wherein the distribution dematcher (2060) is configured for receiving an output vector (e) that has been obtained according to at least one of the methods of claims 1 to 2, and for transforming said output vector (e) into a dematched output signal (s9), said method comprising the following steps:

- receiving said output vector (e),
- applying a transformation depending on a parity check matrix for a channel code to said received output vector (e) to obtain said dematched output signal (s9), wherein the dematched output signal represents an error syndrome of the channel code, and wherein the channel code is one of the following; a binary Golay code, a ternary Golay code or a Hamming code.

**6.** Distribution dematcher (2060) for a receiver, wherein the distribution dematcher (2060) comprises a calculating unit (2062) configured to perform the method according to claim 5.

**7.** Apparatus (10) for processing a digital input signal (IS1), comprising at least one distribution matcher (100) according to one of the claims 3 to 4.

**8.** Optical transmitter (3000) comprising a laser source (20) that is configured to provide an optical carrier signal (ocs), an optical modulator (22) that is configured to modulate said optical carrier signal (ocs), and an apparatus (10) according to claim 7, wherein said apparatus (10) is configured to provide modulation symbols to said optical modulator (22).

**Patentansprüche**

**1.** Verfahren zum Betrieb eines Verteilungsanpassers (100) an einem Sender, wobei der Verteilungsanpasser (100) konfiguriert ist, um ein digitales Eingangssignals (is) zu empfangen und das digitale Eingangssignal (is) in ein Ausgangssignal (os) zu transformieren, wobei das Verfahren die folgenden Schritte umfasst:

- Auswählen (200) einer Folge (s) von Bits des Eingangssignals (is) als ein Syndrom (s) eines Kanalcodes, und
- Umwandeln (202) des Syndroms (s) in einen Ausgangsvektor (e) unter Verwendung eines Syndromdecoders (102) für den Kanalcode,
- wobei das Verfahren ferner das Erzeugen (204) einer Folge von Ausgangssymbolen (sym) des Ausgangssignals (os) in Abhängigkeit von dem Ausgangsvektor (e) umfasst,
- wobei der Kanalcode einer der Folgenden ist: binärer Golay-Code, ternärer Golay-Code, Hamming-Code.

**2.** Verfahren nach Anspruch 1, wobei der Schritt des Umwandelns (202) so durchgeführt wird, dass der Ausgangsvektor (e) eine vorbestimmte Wahrscheinlichkeitsverteilung umfasst, wobei sich insbesondere die vorbestimmte Wahrscheinlichkeitsverteilung von einer Wahrscheinlichkeitsverteilung der Bits des Eingangssignals (is) unterscheidet.

3. Verteilungsanpasser (100) für einen Sender, wobei der Verteilungsanpasser (100) konfiguriert ist, um ein digitales Eingangssignal (is) zu empfangen und das digitale Eingangssignal (is) in ein Ausgangssignal (os) zu transformieren, wobei der Verteilungsanpasser (100) einen Selektor (102) und einen Konverter (104) umfasst, wobei der Verteilungsanpasser (100) konfiguriert ist, um die folgenden Schritte durchzuführen:

- Auswählen (200), mit Hilfe des Selektors (102), einer Folge (s) von Bits des Eingangssignals (is) als ein Syndrom (s) eines Kanalcodes, und
- Umwandeln (202), mit Hilfe des Konverters (104), des Syndroms (s) in einen Ausgangsvektor (e) unter Verwendung eines Syndromdecoders (102) des Kanalcodes,
- Erzeugen (204) einer Folge von Ausgangssymbolen (sym) des Ausgangssignals (os) in Abhängigkeit von dem Ausgangsvektor (e),
- wobei der Kanalcode einer der Folgenden ist: binärer Golay-Code, ternärer Golay-Code, Hamming-Code.

4. Verteilungsanpasser (100) nach Anspruch 3, wobei der Verteilungsanpasser (100) konfiguriert ist, um das Verfahren nach Anspruch 2 durchzuführen.

5. Verfahren zum Betrieb eines Verteilungsanpassungsrückgängigmachers (2060) an einem Empfänger, wobei der Verteilungsanpassungsrückgängigmacher (2060) konfiguriert ist, um einen Ausgangsvektor (e) zu empfangen, der gemäß mindestens einem der Verfahren nach den Ansprüchen 1 bis 2 erhalten wurde, und um den Ausgangsvektor (e) in ein Ausgangssignal (s9) mit rückgängig gemachter Anpassung zu transformieren, wobei das Verfahren die folgenden Schritte umfasst:

- Empfangen des Ausgangsvektors (e),
- Anwenden einer Transformation, die von einer Paritätsprüfungsmatrix für einen Kanalcode abhängt, auf den empfangenen Ausgangsvektor (e), um das Ausgangssignal (s9) mit rückgängig gemachter Anpassung zu erhalten, wobei das Ausgangssignal mit rückgängig gemachter Anpassung ein Fehlersyndrom des Kanalcodes darstellt und wobei der Kanalcode einer der Folgenden ist: ein binärer Golay-Code, ein ternärer Golay-Code oder ein Hamming-Code.

6. Verteilungsanpassungsrückgängigmacher (2060) für einen Empfänger, wobei der Verteilungsanpassungsrückgängigmacher (2060) eine Recheneinheit (2062) umfasst, die konfiguriert ist, um das Verfahren nach Anspruch 5 durchzuführen.

7. Vorrichtung (10) zur Verarbeitung eines digitalen Eingangssignals (IS1), umfassend mindestens einen Verteilungsanpasser (100) nach einem der Ansprüche 3 bis 4.

8. Optischer Sender (3000), umfassend eine Laserquelle (20), die konfiguriert ist, um ein optisches Trägersignal (ocs) bereitzustellen, einen optischen Modulator (22), der konfiguriert ist, um das optische Trägersignal (ocs) zu modulieren, und eine Vorrichtung (10) nach Anspruch 7, wobei die Vorrichtung (10) konfiguriert ist, um Modulationssymbole an den optischen Modulator (22) bereitzustellen.


**Revendications**

1. Procédé d'exploitation d'un dispositif d'appariement de distribution (100) au niveau d'un émetteur, dans lequel le dispositif d'appariement de distribution (100) est configuré pour recevoir un signal numérique d'entrée (is) et pour transformer ledit signal numérique d'entrée (is) en un signal de sortie (os), ledit procédé comprenant les étapes suivantes :

- sélectionner (200) une séquence (s) de bits dudit signal d'entrée (is) en tant que syndrome (s) d'un code de canal, et
- convertir (202) ledit syndrome (s) en un vecteur de sortie (e) en utilisant un décodeur de syndrome (102) pour ledit code de canal,
- dans lequel ledit procédé comprend en outre la génération (204) d'une séquence de symboles de sortie (sym) du signal de sortie (os) en fonction dudit vecteur de sortie (e),
- dans lequel ledit code de canal est l'un des codes suivants : un code de Golay binaire, un code de Golay ternaire, un code de Hamming.

**2.** Procédé selon la revendication 1, dans lequel ladite étape de conversion (202) est réalisée de sorte que ledit vecteur de sortie (e) comprenne une distribution de probabilité prédéterminée, dans lequel, en particulier, ladite distribution de probabilité prédéterminée est différente d'une distribution de probabilité desdits bits dudit signal d'entrée (is).

**3.** Dispositif d'appariement de distribution (100) pour un émetteur, dans lequel le dispositif d'appariement de distribution (100) est configuré pour recevoir un signal numérique d'entrée (is) et pour transformer ledit signal numérique d'entrée (is) en un signal de sortie (os), ledit dispositif d'appariement de distribution (100) comprenant un sélecteur (102) et un convertisseur (104), ledit dispositif d'appariement de distribution (100) étant configuré pour réaliser les étapes suivantes :

- sélectionner (200), au moyen du sélecteur (102), une séquence (s) de bits dudit signal d'entrée (is) en tant que syndrome (s) d'un code de canal, et
- convertir (202), au moyen du convertisseur (104), ledit syndrome (s) en un vecteur de sortie (e) en utilisant un décodeur de syndrome (102) dudit code de canal,
- générer (204) une séquence de symboles de sortie (sym) du signal de sortie (os) en fonction dudit vecteur de sortie (e),
- dans lequel ledit code de canal est l'un des codes suivants : un code de Golay binaire, un code de Golay ternaire, un code de Hamming.

**4.** Dispositif d'appariement de distribution (100) selon la revendication 3, dans lequel ledit dispositif d'appariement de distribution (100) est configuré pour réaliser le procédé selon la revendication 2.

**5.** Procédé d'exploitation d'un dispositif de désappariement de distribution (2060) au niveau d'un récepteur, dans lequel le dispositif de désappariement de distribution (2060) est configuré pour recevoir un vecteur de sortie (e) qui a été obtenu selon au moins un des procédés des revendications 1 et 2, et pour transformer ledit vecteur de sortie (e) en un signal de sortie désapparié (s9), ledit procédé comprenant les étapes suivantes :

- recevoir ledit vecteur de sortie (e),
- appliquer une transformation en fonction d'une matrice de contrôle de parité pour un code de canal audit vecteur de sortie (e) reçu, pour obtenir ledit signal de sortie désapparié (s9), dans lequel le signal de sortie désapparié représente un syndrome d'erreur du code de canal, et dans lequel le code de canal est l'un des codes suivants : un code de Golay binaire, un code de Golay ternaire ou un code de Hamming.

**6.** Dispositif de désappariement de distribution (2060) pour un récepteur, dans lequel le dispositif de désappariement de distribution (2060) comprend une unité de calcul (2062) configurée pour réaliser le procédé selon la revendication 5.

**7.** Appareil (10) de traitement d'un signal numérique d'entrée (IS1), comprenant au moins un dispositif d'appariement de distribution (100) selon l'une des revendications 3 et 4.

**8.** Émetteur optique (3000) comprenant une source laser (20) qui est configurée pour fournir un signal porteur optique (ocs), un modulateur optique (22) qui est configuré pour moduler ledit signal porteur optique (ocs), et un appareil (10) selon la revendication 7, dans lequel ledit appareil (10) est configuré pour fournir des symboles de modulation audit modulateur optique (22).

**Fig. 1**

**Fig. 2**

**Fig. 3**

**Fig. 4**

## Fig. 5

## Fig. 7

## Fig. 8

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BÖCHERER, G. ; STEINER, F. ; SCHULTE, P.** Bandwidth Efficient and Rate-Matched Low-Density Parity-Check Coded Modulation. *IEEE Trans. Commun.,* October 2015
- **SCHULTE, P. ; BÖCHERER, G.** Constant Composition Distribution Matching. *IEEE Trans. Inf. Theory,* December 2015
- TRELLIS SHAPING. **FORNEY JR G D.** IEEE TRANSACTIONS ON INFORMATION THEORY. IEEE PRESS, 01 March 1992, vol. 38, 281-300
- **BUCHALI, F. ; STEINER, F. ; BÖCHERER, G. ; SCHMALEN, L. ; SCHULTE, P. ; IDLER, W.** Rate Adaptation and Reach Increase by Probabilistically Shaped 64-QAM: An Experimental Demonstration. *IEEE Journal Lightwave Technology,* April 2016
- **S. LIN ; D. J. COSTELLO, JR.** Error Control Coding. Prentice Hall
- **T. KASAMI.** A Decoding procedure for multiple-error-correction cyclic codes. *IEEE Trans. Inform. Theory,* April 1964